# FASCICULE DE BREVET EUROPEEN

(11) **EP 1 132 190 B1**
(45) Date de publication et mention de la délivrance du brevet: **04.05.2005**
(21) Numéro de dépôt: 01400318.0
(22) Date de dépôt: 08.02.2001
(51) Int. Cl.: B29C 47/02, E04C 2/40, E04B 1/38, B29D 24/00

(54) **Procédé et dispositif de fabrication de panneaux alvéolaires clipables en matériau thermoplastique présentant un joint d'étanchéité intégré**
Verfahren und Vorrichtung zur Herstellung von hohlwandigen thermoplastischen Panelen mit Clipverbindung und integrierter Dichtung
Method of and apparatus for manufacturing hollow walled plastic snap joining panels having integrated seal

(30) Priorité: 10.03.2000 FR 0003136
(43) Date de publication de la demande: 12.09.2001
(73) Titulaire: KAYSERSBERG PACKAGING, 68320 Kunheim (FR)
(72) Inventeur: Coste, Jean-Philippe, 68240 Kaysersberg (FR); Porret, Laurent, 68180 Horbourg-Wihr (FR)
(74) Mandataire: Bernasconi, Jean Raymond

(56) Documents cités:
- EP-A- 0 025 420
- EP-A- 0 644 033
- DE-A- 3 640 887
- DE-A- 19 625 209
- DE-C- 4 429 091
- US-A- 4 201 024
- US-A- 4 690 862

## Description

La présente invention a trait à un procédé de fabrication d'un panneau ou plaque alvéolaire clipable réalisé en matériau thermoplastique et présentant un joint d'étanchéité intégré.

On connaît des panneaux clipables réalisés en un matériau thermoplastique, présentant une structure alvéolaire, et qui sont susceptibles d'être assemblées les unes aux autres par des bords complémentaires présentant des moyens de clipage, avec interposition d'un joint d'étanchéité reçu dans un logement situé au niveau d'un bord de la plaque et susceptible d'être comprimé par le bord complémentaire de la plaque adjacente. Ces panneaux ou plaques permettent un assemblage facile et rapide pour réaliser, par exemple, des couvertures de bâtiment ou des bardages.

Les bords complémentaires du panneau qui sont réalisés lors de l'extrusion de la plaque, présentent, l'un, une partie clipable mâle, et l'autre, une partie complémentaire femelle pour un assemblage par clipage, le joint pouvant être porté par l'un ou l'autre bord, dans une position telle qu'il se trouve appliqué contre une paroi ou un rebord d'étanchéité complémentaire du bord qui ne porte pas le joint.

Habituellement, les panneaux, formés à partir de plaques extrudées et sectionnées à une longueur déterminée, sont livrés séparément des joints d'étanchéité. Le poseur de panneaux découpe le joint à la longueur de panneau et l'insère, ou le fixe autrement, dans le logement prévu à cet effet sur le bord de panneau.

Cette opération est fastidieuse et augmente le prix de la pose du panneau.

On peut envisager de mettre en place le joint d'étanchéité sur le panneau une fois fabriqué à l'usine pour transporter et vendre le panneau déjà muni de son joint. Cependant, cette opération ne fait que reporter chez le fabricant de panneau le problème de mise en place du joint.

Le brevet allemand De 44 29 091 prévoit d'introduire en continu un joint dans logement d'un profil d'huisserie, à savoir un profil de porte ou fenêtre en introduisant le joint dans le profil lorsque celui-ci se trouve encore dans son état thermoélastique.

La présente intervention se propose de remédier à ces inconvénients et de fournir un procédé de fabrication de tels panneaux incorporant un joint d'étanchéité.

L'invention a pour objet un procédé de fabrication d'un panneau clipable en matière thermoplastique, de structure alvéolaire et présentant un joint incorporé sur l'un de ses bords muni de moyens de clipage, caractérisé en que l'on extrude une plaque alvéolaire présentant le profil dudit panneau, avec une zone susceptible de recevoir un joint d'étanchéité, et que l'on amène, en continu, un joint d'étanchéité dans la dite zone en un emplacement, situé en aval, où la plaque est devenue sensiblement rigide, que l'on fixe le joint à cet emplacement, puis que l'on découpe la plaque en panneaux individuels en aval dudit emplacement.

La mise en place du joint en continu peut se faire sur une plaque à température ambiante ou à température élevée en fonction de la zone d'incorporation du joint, de façon à minimiser des risques de glissement joint-plaque.

Par section alvéolaire du panneau, et donc de la plaque à partir de laquelle les panneaux sont découpés, en entend toute section alvéolaire usuelle permettant de donner à la plaque l'épaisseur et la légèreté voulue, tout en lui conférant les caractéristiques mécaniques et autres souhaités.

De préférence la zone de bord de panneau recevant le joint, forme un logement pour le joint.

Les moyens de fixation du joint peuvent être des moyens de blocage mécanique résultant de la forme du logement, ou des moyens de solidarisation chimique, par exemple, par mise en place d'une mince couche d'un adhésif sur la zone ou la combinaison des deux.

Le joint d'étanchéité peut avoir été fabriqué à l'avance et dans ce cas il est alimenté à partir d'un poste de délivrance tel qu'un dévidoir ou une bobine disposée en un emplacement convenable sur la ligne de fabrication des plaques.

Dans ce mode de réalisation, on préfère que l'emplacement auquel le joint arrive en contact avec la plaque, pour y être fixé, soit un emplacement dans lequel la température de la plaque est encore relativement élevée de sorte que la surface du matériau thermoplastique durci est peu glissante par rapport au matériau du joint. Un tel emplacement peut être avantageusement situé à la sortie des moyens de calibrage de plaque qui sont situés en aval de la filière d'extrusion de plaque.

Cependant, en variante, le joint peut être également amené sur la plaque en un emplacement encore plus en aval, par exemple en aval des moyens de tirage de la plaque, qui sont eux-mêmes situés en aval des moyens de calibrage.

Dans un autre mode de mise en oeuvre, on peut extruder le joint simultanément à l'extrusion de la plaque, et amener le joint extrudé sur la zone ou dans le logement et le maintenir par les moyens précités. Ce dernier mode de mise en oeuvre présente l'avantage de permettre, si on le souhaite, de travailler sur un joint ayant une température encore élevée, à laquelle il est plus malléable et s'adapte bien au logement.

Les moyens d'extrusion du joint peuvent être éloignés de la filière d'extrusion de la plaque, par exemple, en aval de la filière d'extrusion de la plaque, pour extruder le joint et l'amener au contact de la plaque, par exemple, en amont des moyens de calibrage qui sont situés après la filière d'extrusion de plaque, ou, en variante, en aval des moyens de calibrage.

Dans une autre réalisation de ce mode de mise en oeuvre, le joint peut être extrudé au niveau même de la filière de la plaque pour être amené en contact avec la plaque en cours d'extrusion.

Dans un mode de mise en oeuvre préféré de l'invention, le joint peut être mis en place de façon mécanique, par exemple, à l'aide d'un guide et/ou d'un galet, le joint se déroulant au fur et à mesure, en continu, à partir d'une bobine ou d'un dévidoir, ou provenant d'une extrudeuse.

Dans un autre mode de mise en oeuvre, on peut mettre en place, de préférence faiblement en amont de l'emplacement d'arrivée du joint, un adhésif au niveau de la zone ou logement, et on amène le joint, de préférence par les moyens mécaniques précités, sur la zone ou dans le logement, en contact avec l'adhésif.

De façon avantageuse, le joint est réalisé en un matériau compatible avec la matière thermoplastique constituant le panneau. De préférence, un tel joint est réalisé en un matériau élastomère thermoplastique, de type EPDM (terpolymère Ethylène ― Propylène - Diène) ou de préférence de type SEBS (Styrène ― Ethylène / Butylène - Styrène).

Il peut être avantageusement protégé contre les rayons UV, et présenter une section de corps plein ou creux, de préférence circulaire. Selon les applications, il peut être opaque, par exemple, noir ou blanc, ou de préférence translucide.

L'invention a également pour objet un dispositif selon la revendication 11, pour la mise en oeuvre de ce procédé.

Dans une forme de réalisation, le dispositif comprend un moyen d'alimentation d'un joint déjà formé tel qu'un dévidoir ou une bobine situé en un emplacement convenable pour amener le joint au moyen de mise en place.

Dans une autre forme de réalisation, le dispositif peut comprendre des moyens d'extrusion, comprenant à une filière d'extrusion du joint, disposés soit à distance, soit, de préférence, à proximité de l'emplacement auquel le joint est amené au contact de la plaque. Ces moyens d'extrusion peuvent être disposés de façon à amener le joint en un emplacement situé entre les moyens d'extrusion de plaque, c'est-à-dire la filière d'extrusion de plaque et les moyens de calibrage de la plaque situés en aval de la filière, soit en aval de ces moyens de calibrage, par exemple, entre ces moyens et un dispositif tireur, qui assure l'entraînement de la plaque.

Les moyens d'extrusion de joint, lorsqu'ils sont utilisés, peuvent être eux-mêmes disposés, par exemple, entre la filière et les moyens de calibrage pour n'amener le joint au contact de la plaque qu'à des moyens de calibrage, ou bien en sortie des moyens de calibrage avant les moyens de tirage pour amener le joint en contact avec la plaque dans cette zone.

Dans l'autre forme de réalisation, les moyens d'extrusion du joint peuvent être montés au niveau de la filière de plaque pour délivrer le joint au niveau, ou à travers la filière d'extrusion de la plaque.

Bien entendu, les moyens permettant la mise en place et la fixation du joint sont alors situés au voisinage immédiat de la zone correspondante de la plaque, en un emplacement adapté à la position des moyens d'alimentation ou d'extrusion de joint.

Les moyens de mise en place et de fixation peuvent être notamment un guide fixe et/ou un ou plusieurs galets de guidage ou presseurs, et/ou un moyen de mise en place d'un adhésif.

Un moyen de guidage peut être, par exemple, simplement constitué d'un court tronçon de panneau présentant le bord de clipage qui ne porte pas le joint et qui est orienté de façon que la ou lès surfaces d'étanchéité complémentaires du joint, guident progressivement le joint dans son logement.

Dans une forme de réalisation pafficulièrè de l'invention, le dispositif peut comporter, en outre, des moyens d'extrusion d'un joint situés à proximité de l'extrudeuse de la plaque, et de préférence, dans une position telle que le joint se trouve encore à une température relativement élevée lorsqu'il parvient à l'emplacement de contact et de mise en place sur la plaque.

D'autres avantages et caractéristiques apparaîtront à la lecture de la description suivante, faite à titre d'exemple non limitatif, et se référant au dessin annexé dans lequel :
- la figure 1 représente une vue en section du profil d'un panneau alvéolaire dipabie muni de son joint selon l'invention,
- la figure 2 représente une vue schématique en perspective d'une zone de pose du joint dans le panneau.
- les figures 3 et 4 représentent, schématiquement, deux formes de réalisation du dispositif selon l'invention pour la mise en place d'un joint formé à l'avance.
- les figures 5 à 7 représentent, schématiquement, trois formes de réalisation d'un dispositif avec extrusion simultanée du joint, seul ceux des figures 6 et 7 étant conformes à l'invention.

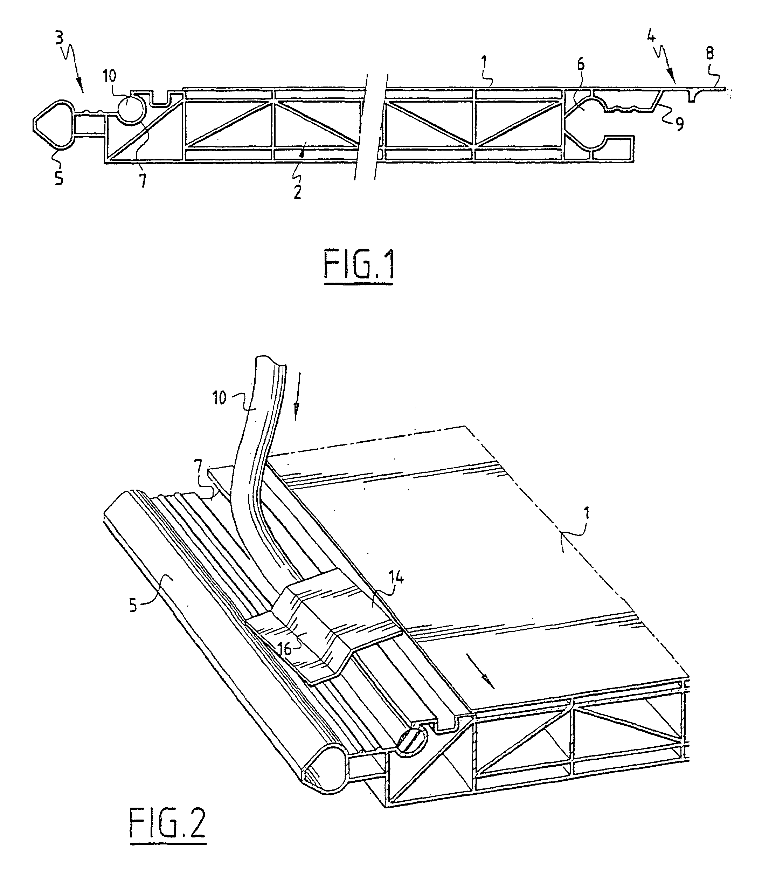

En se référant à la figure 1, on voit un panneau en polycarbonate ayant une section alvéolaire formée de cloisons longitudinales, généralement référencée par 2, telle que décrite dans la demande de brevet français 95 03678.

Un tel panneau est fabriqué par extrusion d'une plaque alvéolaire, la filière étant munie, vers les deux bords parallèles 3 et 4 de la plaque, de moyens pour conférer à ces bords des profils complémentaires permettant l'assemblage de deux panneaux adjacents par clipage. Plus précisément, le profil du bord 3 présente un prolongement mâle 5 de forme lancéolée, susceptible d'être reçu dans un évidemment lancéolé 6 de forme complémentaire du bord 4 du panneau adjacent. Le bord 3 présente, en retrait par rapport au prolongement 5, un logement 7, de forme généralement cylindrique, et ouvert sur un secteur légèrement supérieur à un quart de cercle, vers le haut et vers le bord.

Le bord 4 présente un prolongement supérieur 8, qui rejoint la face supérieure de l'évidement lancéolé 6 par une cloison inclinée 9.

Le logement 7 permet de recevoir, et de maintenir par blocage de forme, un joint cylindrique de section circulaire 10, donc le secteur de surface laissé libre par le logement 7, vient au contact de la surface 9 du panneau adjacent, lorsque celui-ci est clippé. Lors du clipage, la cloison inclinée 9 vient comprimer le joint 10 de la quantité suffisante pour assurer l'étanchéité voulue.

Pour fabriquer, conformément à l'invention, un panneau tel que représenté sur la figure 1, on utilise une extrudeuse classique dont on voit le poinçon 11, qui présente la filière d'extrusion de la plaque ayant la section de profil du panneau, cette plaque étant prise en charge, à une certaine distance, du débouché de la filière, et, après être passée par un calibre usuel 17, par des moyens de tirage et de refroidissement usuels 12, avant d'aboutir à un dispositif de tronçonnement 13 qui découpe la plaque en panneaux successifs de longueur bien déterminée.

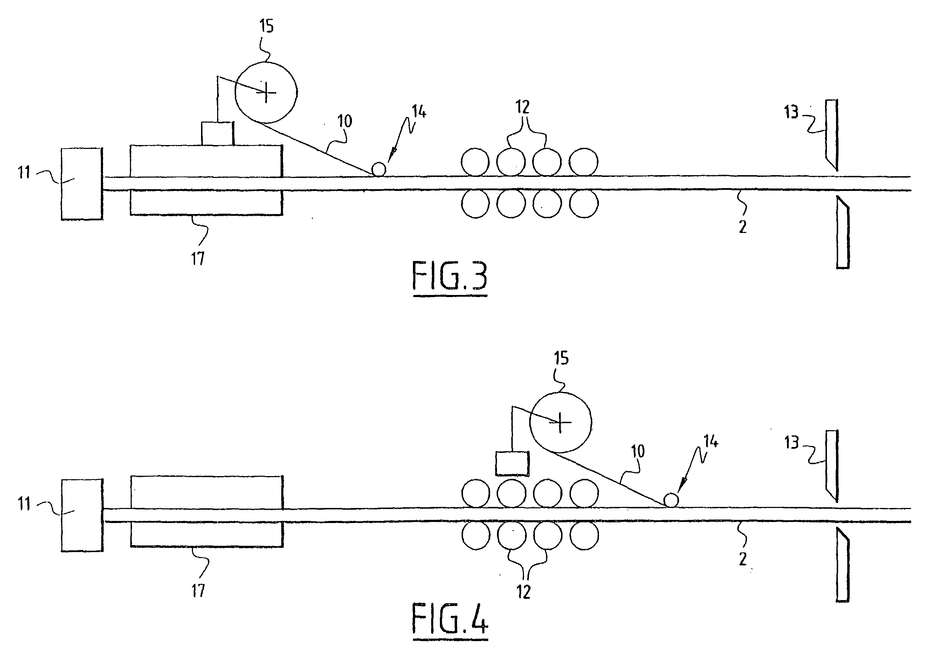

On se réfère à la figure 3

En un emplacement situé en aval de la filière d'extrusion, se trouve disposé un moyen de mise en place et de fixation du joint, schématiquement désigné par la référence 14. Ce moyen 14 permet de mettre en place le joint 10 dans le logement 7, à partir d'un dévidoir 15 dont provient le joint 10, qui est présenté, par exemple, sur une bobine dans le dévidoir.

La distance entre l'emplacement du moyen 14 et la sortie de filière est, dans l'exemple représenté, dans l'ordre de 50 cm et la matière thermoplastique, qui à la sortie de filière est à une température 200°C, présente, à cet emplacement, une température de l'ordre de 70°C, à laquelle la plaque est devenue suffisamment rigide pour supporter la mise en place du joint 10 mais présente encore une surface qui minimise l'effet glissant pour le joint.

Le joint 10, réalisé par exemple en SEBS n'est pas influencé par cette température.

On se réfère à la figure 4.

Dans cette forme de réalisation, les moyens 14, alimentés par le dérouleur 15, sont situés à la sortie des tireurs 12 et avant le dispositif de découpage 13, pour amener le joint au contact de la plaque en un emplacement où la plaque se trouve sensiblement à la température ambiante.

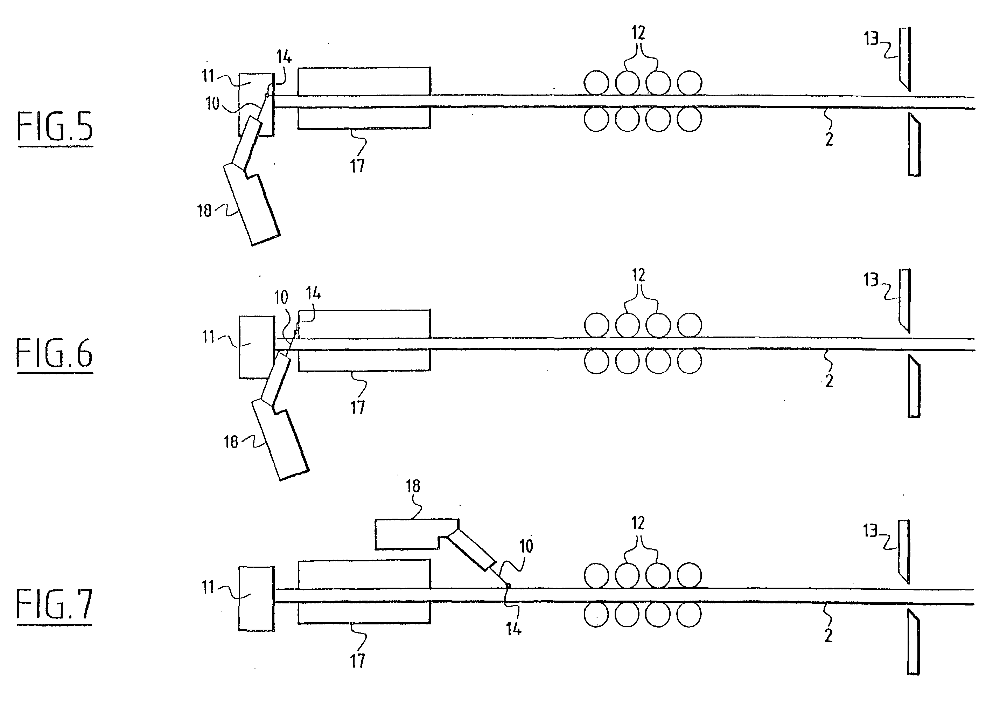

On se réfère à la figure 5.

Ce dispositif comporte une extrudeuse de joint 18 située à proximité de la filière d'extrusion du panneau et qui amène le joint 10 au niveau de la filière en un emplacement auquel il est orienté pour venir au contact du profil en train de se former. Dans ce dispositif, comme dans les suivants, l'entraînement du joint peut être effectué grâce à la plaque qui défile elle-même, et, au besoin, par des moyens spéciaux dans le calibre 17.

On comprend que dans ce dispositif, le joint 10 est déjà durci lorsqu'il arrive dans le passage qui le guide à travers la filière 11.

L'invention n'exclut cependant pas le cas où le joint n'est pas encore rigidifié, au moment où il arrive à la filière portée par le poinçon 11.

On se refère à la figure 6.

On voit une forme de réalisation dans laquelle l'extrudeuse de joint 18 est disposée entre la filière 11 et le calibre 17, les moyens 14 de mise en place du joint étant disposés un peu en amont du calibre dans une zone où la plaque est encore à une température relativement élevée.

On se réfère à la figure 7.

Dans cette forme de réalisation, l'extrudeuse 18 est disposée pour délivrer le joint en un emplacement des moyens 14 situé en aval du calibre 17 et en amont des moyens de tirage. Bien entendu, on pourrait également disposer l'extrudeuse encore plus en aval, et plus précisément en aval des moyens de tirage 12.

On se refère à la figure 2.

On voit à titre d'exemple, que le moyen 14 de mise en place du joint à l'emplacement selon l'invention, est formé d'un court tronçon de profil présentant deux ailes parallèles réunies par une cloison oblique 16 analogue à la cloison 9. Ce tronçon de profil, qui peut d'ailleurs être réalisé en découpant un tronçon de bord 4, est incliné latéralement par rapport à la direction d'extrusion représentée par la flèche sur la figure 2, et également incliné de façon que le bord amont du tronçon 14 soit situé à un niveau supérieur à celui du bord aval. De cette façon, ce tronçon de profil 14 forme une espèce d'entonnoir avec la plaque elle-même, ce qui permet un guidage aisée du joint 10, vers le logement 7, puis amène progressivement le joint 10 à se déformer et pénétrer dans le logement 7 dans lequel il reste maintenu par blocage de forme, sans glisser.

Pour la commodité du dessin, on a donné au tronçon 14 des dimensions en longueur et en largeur relativement réduites par rapport à ce qui serait utilisé en pratique et l'on a également omis de représenter les moyens de fixation qui permettent de maintenir le tronçon 14 fermement en place dans sa position.

Bien entendu, ces moyens de mise en place peuvent être réalisés de différentes autres manières.

Ces moyens peuvent être, par exemple, des moyens de guidage en matériau quelconque, métallique ou non, adaptés pour forcer le joint 10 à pénétrer progressivement dans son logement.

On peut également utiliser des moyens de guidage rotatifs, par exemple, un ou des galets ayant une gorge forçant le joint à pénétrer dans le logement. Ces moyens peuvent être complétés, éventuellement, par des moyens presseurs tels que des galets presseurs, en amont et/ou en aval du moyen de guidage tel que le profil 14.

On peut aussi prévoir en amont des moyens, tels que des guides ou des galets, qui solidarisent effectivement le joint avec la plaque qui défile, des moyens d'amenée d'un agent chimique d'adhésion dans le logement 7, ou toute autre zone destinée à recevoir le joint d'étanchéité.

Egalement le dévidoir 15, qui délivre le joint, peut être remplacée par une extrudeuse extrudant un joint avec les moyens éventuellement nécessaires pour tirer et refroidir le joint, la traction nécessaire à l'extrusion pouvant éventuellement être assurée directement par la plaque sur laquelle le joint est fixé en continu.

Enfin, on constate que, grâce à l'invention, le joint 10 se trouve parfaitement positionné et fixé sur la plaque qui sans aucune contrainte sensible en direction longitudinale du joint. Il en résulte que, lorsque la plaque, munie de son joint, parvient au dispositif de tronçonnement 13, le tronçonnement ne déclenche aucune réaction locale du joint qui reste parfaitement aligné à fleur de la ligne de séparation. Il en est de même, lorsque l'utilisateur du panneau sectionne lui-même un panneau avec les moyens du chantier.

## Revendications

1. Procédé de fabrication d'un panneau clipable en matière thermoplastique, de structure alvéolaire, et présentant un joint (10) incorporé sur l'un de ses bords muni de moyens de clipage, selon lequel on extrude une plaque alvéolaire (1) présentant le profil dudit panneau, avec une zone (7) susceptible de recevoir un joint d'étanchéité (10), on amène, en continu, un joint d'étanchélté (10) dans la dite zone en un emplacement, situé en aval où la plaque est devenue sensiblement rigide on fixe le joint (10) à cet emplacement, puis on découpe la plaque en panneaux individuels en aval dudit emplacement.

2. Procédé selon la revendication 1, **caractérisé en ce que** la plaque est encore à température élevée audit emplacement.

3. Procédé selon l'une des revendications 1 et 2 **caractérisé en ce que** la zone de bord de panneau recevant le joint, forme un logement (7) pour le joint.

4. Procédé selon l'une des revendications 1 à 3, **caractérisé en ce que** l'on fixe le joint par un blocage mécanique.

5. Procédé selon l'une des revendications 1 à 4, **caractérisé en ce que** l'on fixe le joint par des moyens de solidarisation chimique.

6. Procédé selon la revendication 5, **caractérisé en ce que** l'on met en place une mince couche d'un adhésif sur la zone, en amont du contact entre le joint et la zone.

7. Procédé selon l'une des revendications 1 à 6, **caractérisé en ce que** le joint est mis en place de façon mécanique, à l'aide d'un guide (14) et/ou d'un galet, le joint se déroulant au fur et à mesure, en continu, à partir d'une source (15).

8. Procédé selon l'une des revendications 1 à 7, **caractérisé en ce que** le joint (10) est amené à partir d'une bobine ou d'un dévidoir.

9. Procédé l'une des revendications 1 à 8, **caractérisé en ce que** l'on extrude le joint (10) simultanément à l'extrusion de la plaque, (1) et on amène le joint extrudé sur la zone ou dans le logement (7).

10. Procédé selon la revendication 9, **caractérisé en ce que** l'on extrude le joint au niveau de la filière d'extrusion de plaque.

11. Dispositif pour la mise en oeuvre du procédé selon l'une des revendications 1 à 10, **caractérisé en ce qu'**il comporte, à une certaine distance en aval de la filière d'une extrudeuse (11) assurant l'extrusion de la plaque thermoplastique alvéolaire (1), en un emplacement où la plaque est devenue sensiblement rigide, des moyens (14) permettant la mise en place et la fixation d'un joint (10) continu sur une zone ou dans un logement de joint (7) sur le bord pertinent de la plaque.

12. Dispositif selon la revendication 11, **caractérisé en ce que** les moyens de mise en place et de fixation (14), sont un guide fixe et/ou un ou plusieurs galets de guidage ou presseurs, et/ou un moyen de mise en place d'un adhésif.

13. Dispositif selon l'une des revendications 11 et 12, **caractérisé par** un moyen d'alimentation d'un joint déjà formé tel qu'un dévidoir ou une bobine situé en un emplacement convenable pour amener le joint au moyen (14) de mise en place.

14. Dispositif selon l'une des revendications 11 et 12, **caractérisé en ce qu'**il comporte (11), des moyens d'extrusion (18) d'un joint (10).

15. Dispositif selon la revendication 14, **caractérisé en ce que** lesdits moyens d'extrusion délivrent le joint au niveau de la filière d'extrusion de la plaque.

## Patentansprüche

1. Verfahren zum Herstellen eines steckbaren Thermoplast-Paneels mit Hohlkammer-Struktur, welches eine Dichtung (10) aufweist, welche auf einer von dessen Seiten eingebaut wird, welche mit den Mitteln zum Steckverbinden versehen ist, wobei eine Hohlkammer-Platte (1) extrudiert wird, welche das Profil des Paneels aufweist, mit einem Bereich (7), welcher zum Aufnehmen einer Fugendichtung (10) imstande ist, wobei eine kontinuierliche Fugendichtung (10) in den besagten Bereich verlegt wird an einer stromabwärts gelegen Einbaustelle von wo die Platte deutlich steif wird, wobei die Dichtung (10) an jener Einbaustelle befestigt wird, wonach die Platte stromabwärts von der Einbaustelle in individuelle Paneele geschnitten wird.

2. Verfahren gemäß Anspruch 1, **dadurch gekennzeichnet, dass** die Platte noch eine erhöhte Temperatur bei der Einbaustelle hat.

3. Verfahren gemäß einem der Ansprüche 1 und 2, **dadurch gekennzeichnet, dass** der Bereich auf der Seite des Paneels, welche die Dichtung aufnimmt, einen Sitz für die Dichtung (7) ausbildet.

4. Verfahren gemäß einem der Ansprüche 1 bis 3, **dadurch gekennzeichnet, dass** die Dichtung durch eine mechanische Klemmung befestigt wird.

5. Verfahren gemäß einem der Ansprüche 1 bis 4, **dadurch gekennzeichnet, dass** die Dichtung mittels Mitteln zum chemischen Verbinden befestigt wird.

6. Verfahren gemäß Anspruch 5, **dadurch gekennzeichnet, dass** eine dünne Klebstoff-Schicht auf den Bereich stromaufwärts von dem Kontakt zwischen der Dichtung und dem Bereich aufgebracht wird.

7. Verfahren gemäß einem der Ansprüche 1 bis 6, **dadurch gekennzeichnet, dass** die Dichtung auf mechanische Weise mit der Hilfe einer Führung (14) und/oder einer Walze aufgebracht wird, wobei die Dichtung entsprechend kontinuierlich aus einer Quelle (15) abgerollt wird.

8. Verfahren gemäß einem der Ansprüche 1 bis 7, **dadurch gekennzeichnet, dass** die Dichtung (10) im Wesentlichen von einer Spule oder Abrollhaspel zugeführt wird.

9. Verfahren gemäß einem der Ansprüche 1 bis 8, **dadurch gekennzeichnet, dass** die Dichtung (10) gleichzeitig mit der Extrusion der Platte (1) extrudiert wird und die extrudierte Dichtung auf den Bereich oder in den Sitz (7) zugeführt wird.

10. Verfahren gemäß Anspruch 9, **dadurch gekennzeichnet, dass** die Dichtung auf dem Niveau der Extrusion-Installation der Platte extrudiert wird.

11. Vorrichtung zum Durchführen des Verfahrens gemäß den Ansprüchen 1 bis 10, **dadurch gekennzeichnet, dass** sie bei einem bestimmten Abstand stromabwärts von der Installation von einem Extruder (11), welcher die Extrusion der thermoplastischen Hohlkammerplatte (1) sichert, an einer Einbaustelle, wo die Platte deutlich steif wird, Mittel (14) aufweist, welche das Anbringen und Fixieren von einer kontinuierlichen Dichtung (10) auf einen Bereich oder in einen Dichtungssitz (7) auf der zutreffenden Seite der Platte ermöglicht.

12. Vorrichtung gemäß Anspruch 11, **dadurch gekennzeichnet, dass** die Mittel (14) zum Anbringen und zum Fixieren eine fixierte Führung und/oder eine oder mehrere Walzen zum Führen oder Pressen und/oder Mittel zum Anbringen von einem Klebstoff sind.

13. Vorrichtung gemäß einem der Ansprüche 11 und 12, **gekennzeichnet durch** ein Mittel zum Zuführen einer schon ausgebildeten Dichtung wie einer Abrollhaspel oder einer Spule, welches an einer Einbaustelle angeordnet ist, welche zum Zuführen über die Mittel (14) zum Anbringen zweckmäßig ist.

14. Vorrichtung gemäß einem der Ansprüche 11 und 12, **dadurch gekennzeichnet, dass** sie (11) Extrusionsmittel (18) von einer Dichtung (10) aufweist.

15. Vorrichtung gemäß Anspruch 14, **dadurch gekennzeichnet, dass** jene Extrusionsmittel die Dichtung auf dem Niveau der Extrusions-Installation der Platte liefern.

## Claims

1. Process for manufacturing a snap-joining panel made of thermoplastic material of cellular structure and having a joint (10) incorporated on one of its edges provided with snap-fit means, according to which a cellular sheet (1) having the profile of said panel is extruded, with a zone (7) adapted to receive a sealing joint (10), a sealing joint (10) is continuously brought into said zone at a location disposed downstream where the sheet has become substantially rigid, the joint (10) is fixed at this location, then the sheet is cut up into individual panels downstream of said location.

2. Process according to claim 1, **characterised in that** the sheet is still at an elevated temperature at said location.

3. Process according to one of claims 1 and 2, **characterised in that** the zone of the panel edge receiving the joint forms a recess (7) for the joint.

4. Process according to one of claims 1 to 3, **characterised in that** the joint is fixed by mechanical locking.

5. Process according to one of claims 1 to 4, **characterised in that** the joint is fixed by chemical bonding means.

6. Process according to claim 5, **characterised in that** a thin layer of an adhesive is placed on the zone, upstream of the contact between the joint and the zone.

7. Process according to one of claims 1 to 6, **characterised in that** the joint is positioned mechanically by means of a guide (14) and/or a roller, the joint unrolling continuously as it goes, starting from a supply point (15).

8. Process according to one of claims 1 to 7, **characterised in that** the joint (10) is supplied from a reel or a dispenser.

9. Process according to one of claims 1 to 8, **characterised in that** the joint (10) is extruded simultaneously with the extrusion of the sheet (1) and the extruded joint is placed on the zone or in the recess (7).

10. Process according to claim 9, **characterised in that** the joint is extruded level with the extrusion die for the sheet.

11. Apparatus for carrying out the process according to one of claims 1 to 10, **characterised in that** it comprises, at a certain distance downstream of the die of an extruder (11) which extrudes the cellular thermoplastic sheet (1), at a location where the sheet has become substantially rigid, means (14) for positioning and fixing a continuous joint (10) on a zone or in a joint recess (7) on the appropriate edge of the sheet.

12. Apparatus according to claim 11, **characterised in that** the positioning and fixing means (14) consist of a fixed guide and/or one or more guiding or pressing rollers, and/or means for applying an adhesive.

13. Apparatus according to one of claims 11 and 12, **characterised by** means for supplying a joint which has already been formed, such as a dispenser or a reel located at a suitable location for supplying the joint to the positioning means (14).

14. Apparatus according to one of claims 11 and 12, **characterised in that** it comprises (11) means (18) for extruding a joint (10),

15. Apparatus according to claim 14, **characterised in that** said extrusion means deliver the joint level with the extrusion die for the sheet.
